(19) **Europäisches Patentamt**

**European Patent Office**

**Office européen des brevets**

(11) **EP 0 967 177 B1**

(12) **FASCICULE DE BREVET EUROPEEN**

(45) Date de publication et mention
de la délivrance du brevet:
**19.02.2003 Bulletin 2003/08**

(51) Int Cl.[7]: **C01F 7/02**, B01J 23/04

(21) Numéro de dépôt: **99401509.7**

(22) Date de dépôt: **18.06.1999**

(54) **Nouvelle alumine, son procédé de preparation et son utilisation en tant que catalyseur, support de catalyseur ou adsorbant**

Neues Aluminiumoxid, Verfahren zu seiner Herstellung und Verwendung als Katalysator, Katalysatorträger und Adsorbsiontmittel

New alumina, process for the preparation thereof and it's use as catalyst, catalyst support and adsorbant

(84) Etats contractants désignés:
**BE DE DK GB NL**

(30) Priorité: **25.06.1998 FR 9808089**

(43) Date de publication de la demande:
**29.12.1999 Bulletin 1999/52**

(73) Titulaire: **INSTITUT FRANCAIS DU PETROLE**
**92852 Rueil-Malmaison Cedex (FR)**

(72) Inventeurs:
• **Nedez, Christophe**
**30340 Salindres (FR)**

• **Le Loarer, Jean-Luc**
**30340 Salindres (FR)**
• **Taxil, Bernard**
**38450 Vif (FR)**

(56) Documents cités:
**EP-A- 0 111 911       EP-A- 0 219 637**
**DE-A- 1 443 364**

Remarques:
Le dossier contient des informations techniques présentées postérieurement au dépôt de la demande et ne figurant pas dans le présent fascicule.

**EP 0 967 177 B1**

**Description**

La présente invention a trait à une nouvelle alumine activée présentant une acidité optimisée, son procédé de préparation et son utilisation en tant que catalyseur, support de catalyseur ou adsorbant.

L'alumine est utilisée comme catalyseur de nombreuses réactions chimiques et notamment de réactions nécessitant des conditions opératoires acides. C'est le cas, par exemple, des réactions de déshydratation des alcools ou d'isomérisation de chaîne d'oléfines. Dans de telles réactions, plus l'alumine sera active, plus la conversion sera élevée. Il existe donc un besoin pour des alumines présentant un caractère acide élevé.

L'alumine est également souvent utilisée comme adsorbant. Dans certains cas, il peut être utile d'utiliser une alumine acide, comme pour sécher les halogénures organiques.

Cependant, une alumine trop acide peut également se révéler néfaste car des réactions secondaires peuvent intervenir, d'où un rendement inférieur pour la réaction désirée. Dans la réaction de déshydratation des alcools, des réactions de condensation et de déshydrogénation peuvent avoir lieu. Dans le cas du séchage des halogénures organiques, des éthers se forment.

Ces réactions parasites font chuter le rendement, en outre, elles peuvent jouer un rôle néfaste sur la stabilité de l'alumine, et amoindrir sa durée de vie.

Un but de la présente invention est de proposer une alumine présentant une acidité élevée et optimisée.

Un autre but de la présente invention est de proposer une alumine présentant une acidité élevée et optimisée de manière à limiter les réactions secondaires.

Un autre but est de proposer un procédé de préparation d'une telle alumine.

Dans ces buts, l'invention concerne une alumine activée présentant une teneur en métaux alcalins, exprimée en $M_2O$, comprise entre 500 et 8000 ppm en poids et une structure cristalline comprenant au moins 5 % en poids d'alumine de phase η.

L'invention concerne également un procédé de préparation de cette alumine qui consiste à mettre en oeuvre les étapes suivantes:

1. on mélange :

   - une alumine (A) issue de la déshydratation rapide de trihydroxyde d'aluminium de phase hydrargillite, et
   - un trihydroxyde d'aluminium de phase bayerite (B),

   dans des proportions massiques A/B comprises entre 100/0,1 et 100/30,
   2. éventuellement, on met en forme ce mélange,
   3. on fait mûrir le mélange jusqu'à ce que le taux de trihydroxyde d'aluminium bayerite soit d'au moins 5 % en poids,
   4. on calcine le mélange à une température d'au moins 250°C.

Enfin, l'invention concerne l'utilisation de cette alumine en tant que catalyseur, support de catalyseur et/ou adsorbant.

L'invention concerne donc tout d'abord une alumine présentant une teneur en métaux alcalins, exprimée en $M_2O$, comprise entre 500 et 8000 ppm en poids et une structure cristalline comprenant au moins 5 % en poids d'alumine de phase η (éta).

L'alumine selon l'invention est donc caractérisée, d'une part, par sa teneur en métaux alcalins. De préférence, le métal alcalin est le sodium. Dans le cas du sodium, la teneur en $Na_2O$ est, de préférence, comprise entre 500 et 5000 ppm en poids, encore plus préférentiellement comprise entre 1000 et 3600 ppm en poids, voire entre 1200 et 2900 ppm.

L'alcalin est généralement présent sous sa forme d'oxyde.

D'autre part, l'alumine selon l'invention est caractérisée par sa structure cristalline : cette dernière doit comprendre au moins 5 % en poids d'alumine de phase η, de préférence au moins 8 % en poids. En général, cette teneur en alumine η est d'au plus 60 % en poids. Une alumine selon l'invention présentant une teneur en alumine η comprise entre 8 et 40 %, voire entre 12 et 35 %, est particulièrement préférée.

Le complément à l'alumine η dans la structure cristalline de l'alumine selon l'invention est constitué en partie d'alumine χ (chi), en partie d'alumine γ (gamma) et d'alumine amorphe.

L'alumine η provient de la calcination du trihydroxyde d'aluminium de phase bayerite. L'alumine selon l'invention est donc issue de la calcination d'hydroxyde d'aluminium dont la structure cristalline comprend au moins 5 % en poids de trihydroxyde d'aluminium de phase bayerite. De préférence, cet hydroxyde d'aluminium précurseur comprend au plus 60 % en poids de trihydroxyde d'aluminium de phase bayerite. Le contrôle se fait par diffraction des rayons X.

Les alumines selon l'invention pour lesquelles la teneur en métaux alcalins, exprimée en $M_2O$, est comprise

entre 1000 et 3600 ppm et présentant une structure cristalline comprenant entre 8 et 40 % en poids d'alumine de phase η sont préférées, ainsiq ue les alumines pour lesquelles la teneur en métaux alcalins, exprimée en $M_2O$, est comprise entre 1200 et 2900 ppm et présentant une structure cristalline comprenant entre 12 et 35 % en poids d'alumine de phase η

L'alumine selon l'invention présente en général une surface spécifique BET d'au moins 40 $m^2/g$, de préférence d'au moins 60 $m^2/g$. Cette surface spécifique est une surface mesurée par la méthode BET.

On entend par surface mesurée par la méthode BET, la surface spécifique déterminée par adsorption d'azote conformément à la norme ASTM D 3663-78 établie à partir de la méthode BRUNAUER - EMMETT - TELLER décrite dans le périodique "The Journal of the American Chemical Society", 60, 309 (1938).

L'alumine selon l'invention présente en général un volume poreux total d'au moins 0,15 ml/g, de préférence d'au moins 0,25 ml/g. Ce VPT est mesuré de la façon suivante. On détermine la valeur de la densité de grain et de la densité absolue : les densités de grain (Dg) et absolue (Da) sont mesurées par la méthode de picnométrie respectivement au mercure et à l'hélium, le VPT est donné par la formule :

$$\frac{1}{Dg} - \frac{1}{Da} \ .$$

L'alumine selon l'invention présente une acidité particulièrement élevée qui peut être mesurée par sa capacité d'isomérisation de chaîne du 1-butène. Ainsi, la capacité d'isomérisation de chaîne du 1-butène par l'alumine selon l'invention à 400°C par rapport à l'équilibre thermodynamique est d'au moins 60 %.

Cette acidité est également optimisée, si bien que la capacité d'isomérisation de chaîne du 1-butène par l'alumine selon l'invention à 300°C par rapport à l'équilibre thermodynamique est d'au plus 97 %, de préférence d'au plus 95 %, encore plus préférentiellement d'au plus 92 %.

Les capacités d'isomérisation de chaîne du 1-butène sont mesurées en suivant la méthode ci-après.

On introduit 500 mg d'alumine selon l'invention broyée (taille des particules comprise entre 400 et 500 μm) dans un réacteur en verre. Le produit est conditionné in situ pendant 2 h à 300°C sous un balayage d'hélium présentant un débit de 3,9 l/h. La température du réacteur est ensuite augmentée en passant par trois paliers à 300, 350 puis 400°C. A chaque palier de température, trois injections de 0,2 ml du butène sont faites dans le réacteur, toujours maintenu sous un balayage d'hélium de 3,9 l/h. L'analyse des gaz de sortie se fait par chromatographie en phase gazeuse. Elle permet de mesurer la quantité de 1-butène non transformé, ainsi que la quantité de 2-cis- et 2-trans-butène formés.

On détermine par le calcul la constante d'équilibre thermodynamique Kth(T) théorique et par le résultat des mesures, la constante d'équilibre K(T) réelle.

$$Kth(T) = \frac{[\text{2-cis-butène}]e + [\text{2-trans-butène}]e}{[\text{1-butène}]e + [\text{2-cis-butène}]e + [\text{2-trans-butène}]e}$$

$$K(T) = \frac{[\text{2-cis-butène}] + [\text{2-trans-butène}]}{[\text{1-butène}] + [\text{2-cis-butène}] + [\text{2-trans-butène}]}$$

T est la température du butène à la sortie du réacteur. Les autres valeurs représentent les concentrations en sortie de réacteur ou à l'équilibre ([ ]e) pour la température T. Le pouvoir isomérisant ou taux d'isomérisation A(T) est donné par la formule suivante :

$$A(T) = \frac{K(T) \ X \ 100}{Kth(T)}$$

L'alumine selon l'invention peut se présenter sous tout type de forme. De préférence, l'alumine selon l'invention se présente sous forme de billes. Ces billes ont en général supérieur à 0,7 mm, de préférence compris entre 0,7 et 8 mm, encore plus préférentiellement entre 1 et 5 mm.

L'invention concerne également un procédé de préparation de l'alumine ci-dessus mettant en oeuvre les étapes suivantes :

  1. on mélange :

  - une alumine (A) issue de la déshydratation rapide de trihydroxyde d'aluminium de phase hydrargillite, et
  - un trihydroxyde d'aluminium de phase bayerite (B),

dans des proportions massiques A/B comprises entre 100/0,1 et 100/30,

2. éventuellement, on met en forme ce mélange,

3. on fait mûrir le mélange jusqu'à ce que le taux de trihydroxyde d'aluminium de phase bayerite soit d'au moins 5 % en poids,

4. on calcine le mélange à une température d'au moins 250°C.

L'alumine A est une alumine dite "flash" issue de la déshydratation rapide de phase hydrargillite. Cette déshydratation rapide est habituellement obtenue à l'aide d'un courant de gaz chauds, la température d'entrée des gaz dans l'appareillage variant généralement de 400 à 1200°C, le temps de contact de l'alumine avec les gaz chauds est généralement compris entre une fraction de seconde et 4-5 secondes ; un tel procédé de préparation d'alumine A a particulièrement été décrit dans le brevet FR-A-1 108 011.

Le trihydroxyde d'aluminium de phase bayerite B peut être un gel de bayerite, ce dernier peut être obtenu par précipitation de germes de bayerite, puis cristallisation par mûrissement.

L'alcalin est généralement présent dans la matière première utilisé, notamment dans l'alumine A. Son taux peut être ajusté par lavage de l'alumine A.

Ces deux composés sont mélangés dans des proportions massiques A/B comprises entre 100/0,1 et 100/30, de préférence entre 100/0,5 et 100/20.

Il est possible d'ajouter à ce mélange des additifs de mise en forme ou des porogènes.

Ce mélange est ensuite éventuellement mis en forme par toute technique connue de l'homme du métier notamment par extrusion, granulation, pastillage, compactage, mise en forme en gouttes (oil-drop). De préférence, la mise en forme est réalisée par granulation par technologie tournante. On entend par technologie tournante tout appareil dans lequel l'agglomération s'effectue par mise en contact et rotation du produit à granuler sur lui-même. Comme appareil de ce type, on peut citer le drageoir tournant ou le tambour tournant.

Le mélange des composés, éventuellement mis en forme, est ensuite mûri de manière à obtenir un mélange présentant un taux de trihydroxyde d'aluminium de phase bayerite d'au moins 5 % en poids, de préférence d'au moins 8 %. En général, ce taux est d'au plus 60 %. Selon la variante préférée, ce taux est compris entre 8 et 40 %. Le mûrissement est un traitement hydrothermique du mélange. La température est généralement comprise entre 30 et 150°C. Il peut se faire sous pression. Le contrôle du taux de bayerite se fait par diffraction par rayons X.

Le mélange mûri est ensuite calciné à une température d'au moins 250°C, de préférence entre 275 et 550°C.

Enfin, l'invention concerne l'utilisation de l'alumine ci-dessus en tant que catalyseur ou support de catalyseur, notamment dans les réactions suivantes : déshydratation des alcools, isomérisation des chaînes d'oléfines.

L'invention concerne également l'utilisation de l'alumine ci-dessus en tant qu'agent de dessiccation des halogénures organiques, par exemple des halogénures d'alkyle et/ou des halogénures d'aryle.

Les exemples suivants illustrent l'invention sans toutefois en limiter la portée.

## EXEMPLES

### Préparation des alumines

L'alumine 1 a été obtenue par granulation d'une alumine A issue de la déshydratation rapide de trihydroxyde d'aluminium hydrargillite.

Toutes les autres alumines ont été préparées par mélange, à l'aide d'un mélangeur Gericke, d'une alumine A issue de la déshydratation rapide de trihydroxyde d'aluminium hydrargillite et d'un gel de trihydroxyde d'aluminium bayerite B dans un rapport massique A/B tel qu'indiqué dans le tableau 1. Le mélange a ensuite été granulé avec de l'eau : on obtient des billes de granulométrie comprise entre 2 et 5 mm.

Les billes ont ensuite été mûries à 100°C jusqu'à obtention du taux de trihydroxyde d'aluminium bayerite désiré, le contrôle étant effectué par diffraction X.

Les billes mûries ont enfin été calcinés à 450°C.

Dans le cas de l'alumine 2, l'alumine A a été dopée, avant granulation, avec de la soude pour parvenir à 8550 ppm de $Na_2O$ sur le produit final.

Les alumines 4 à 8 ont été obtenues par mélange, en des proportions à chaque fois ajustées, de deux poudres d'alumines A1 et A2 issues de la déshydratation rapide de trihydroxyde d'aluminium hydrargillite présentant des teneurs en soude différentes (A étant alors la somme A1 + A2).

Les rapports massiques entre les matières premières A et B sont donnés dans le tableau 1.

### Taux d'isomérisation des alumines

Les conditions opératoires de l'isomérisation sont celles définies ci-dessus. Les résultats du tableau 1 correspondent à la moyenne des trois tests assurés à 400°C.

Tableau 1

| Alumine | A/B | % de phase $\eta$ | Teneur en $Na_2O$ (ppm en poids) | Surface spécifique ($m^2/g$) | Taux d'isomérisation (%) | |
|---|---|---|---|---|---|---|
| | | | | | à 400°C | à 300°C |
| 1 comparatif | 100/0 | 4 | 3640 | 328 | 31 | 3 |
| 2 comparatif | 100/1 | 12 | 8550 | 346 | 8 | 0,5 |
| 3 | 100/0,8 | 12 | 3640 | 348 | 50 | 9,5 |
| 4 | 100/3 | 21 | 2760 | 352 | 82 | 34 |
| 5 | 100/1 | 14 | 2425 | 341 | 76 | 28 |
| 6 | 100/1 | 13 | 1350 | 202 | 70 | 21 |
| 7 | 100/1 | 15 | 860 | 192 | 81 | 18 |
| 8 | 100/3 | 22 | 2290 | 352 | 92 | 55 |
| 9 | 100/1 | 15 | 3300 | 356 | 68 | 14 |
| 10 | 100/5 | 28 | 3570 | 332 | 86 | 41 |

On observe que les alumines qui présentent à la fois un taux de sodium et un taux de phase $\eta$ selon l'invention conduisent à des niveaux d'isomérisation élevés contrairement aux alumines qui ne remplissent qu'une de ces deux conditions.

Rendement et sélectivité des alumines en déshydratation des alcools

On broie l'alumine entre 0,8 et 1 mm.

On prétraite 0,4 g de l'alumine broyée durant 2 heures à 400°C. Après retour à la température de l'expérience, l'alumine est soumise à douze injections consécutives d'un flux constitué d'azote ayant traversé un bain d'isopropanol maintenu à 30°C, le débit est de 4 l/h.

Le flux sortant de chacune des injections est analysé par chromatographie en phase gazeuse ; les données affichées dans le tableau 2 correspondent à la mesure effectuée après la douzième injection. Le produit de la réaction principale de déshydratation est le propylène. Les réactions secondaires sont la condensation, qui conduit au diisopropyléther, et la déshydrogénation, qui conduit à l'acétone.

Le tableau 2 donne les résultats en conversion de l'isopropanol.

Tableau 2

| Alumine | Conversion de l'isopropanol (%) | | | |
|---|---|---|---|---|
| | T = 200°C | T = 225°C | T = 250°C | T = 275°C |
| 1 comparatif | | 8 | 18 | 36 |
| 4 | | 28 | 62 | 97 |
| 8 | 19 | 33 | 70 | 99 |

On observe que les alumines selon l'invention donnent de bons résultats en conversion.

En ce qui concerne la sélectivité en propylène, elle dépasse 80 % quand la conversion est supérieure à 35 %, elle est de 98 % quand la conversion est de 70 %. Par conséquent, les alumines selon l'invention, dont les taux de conversion sont élevés, donnent également de bons résultats en sélectivité.

**Revendications**

**1.** Alumine activée présentant une teneur en métaux alcalins, **caractérisée en ce que** le métal alcalin est le sodium, que la teneur en Na2O est comprise entre 500 et 5000 ppm en poids, et **en ce que** sa structure cristalline comprend au moins 5 % en poids d'alumine de phase η.

**2.** Alumine activée présentant une teneur en métaux alcalins, **caractérisée en ce que** la teneur en métaux alcalins, exprimée en M2O, est comprise entre 500 et 8000 ppm en poids, et **en ce que** sa structuré cristalline comprend entre 8 % et 40% en poids d'alumine de phase η.

**3.** Alumine activée selon la revendication 1, **caractérisée en ce que** sa structure cristalline comprend au plus 60 % en poids d'alumine de phase η.

**4.** Alumine activée selon l'une des revendications 1 à 3, **caractérisée en ce qu'**elle est issue de la calcination d'hydroxyde d'aluminium dont la structure cristalline comprend au moins 5 % en poids de trihydroxyde d'aluminium de phase bayerite.

**5.** Alumine activée selon l'une quelconque des revendications précédentes, **caractérisée en ce que** sa teneur en métaux alcalins, exprimée en $M_2O$, est comprise entre 1000 et 3600 ppm et **en ce que** sa structure cristalline comprend entre 8 et 40 % en poids d'alumine de phase η.

**6.** Alumine activée selon l'une quelconque des revendications précédentes, **caractérisée en ce que** sa teneur en métaux alcalins, exprimée en $M_2O$, est comprise entre 1200 et 2900 ppm et **en ce que** sa structure cristalline comprend entre 12 et 35 % en poids d'alumine de phase η.

**7.** Alumine activée selon l'une quelconque des revendications précédentes , **caractérisée en ce qu'**elle présente une surface spécifique d'au moins 40 $m^2/g$.

**8.** Alumine activée selon l'une quelconque des revendications précédentes, **caractérisée en ce qu'**elle présente un volume poreux total d'au moins 0,15 ml/g.

**9.** Alumine activée selon l'une quelconque des revendications précédentes, **caractérisée en ce que** sa capacité d'isomérisation de chaîne du 1-butène à 400°C par rapport à l'équilibre thermodynamique est d'au moins 60 %.

**10.** Alumine activée selon l'une quelconque des revendications précédentes, **caractérisée en ce que** sa capacité d'isomérisation de chaîne du 1-butène à 300°C par rapport à l'équilibre thermodynamique est d'au plus 97 %.

**11.** Procédé de préparation d'une alumine activée selon l'une des revendications 1 à 9 **caractérisé en ce qu'**il comprend les étapes suivantes :

1. on mélange :

- une alumine (A) issue de la déshydratation rapide de trihydroxyde d'aluminium de phase hydrargillite, et
- un trihydroxyde d'aluminium bayerite (B),

dans des proportions massiques A/B comprises entre 100/0,1 et 100/30,
2. éventuellement, on met en forme ce mélange,
3. on fait mûrir le mélange jusqu'à ce que le taux de trihydroxyde d'aluminium de phase bayerite soit d'au moins 5 % en poids,
4. on calcine le mélange à une température d'au moins 250°C.

**12.** Utilisation de l'alumine activée selon l'une des revendications 1 à 10 ou issue du procédé selon la revendication 11 en tant que catalyseur, support de catalyseur et/ou adsorbant.

**13.** Utilisation selon la revendication 12 en tant que catalyseur de déshydratation des alcools.

**14.** Utilisation selon la revendication 12 en tant que catalyseur d'isomérisation des oléfines.

**15.** Utilisation selon la revendication 12 en tant qu'agent de dessiccation des halogénures organiques.

**Patentansprüche**

1. Aktiviertes Aluminiumoxyd, das einen Gehalt an Alkalimetallen aufweist, **dadurch gekennzeichnet, dass** das Alkalimetall Natrium ist, dass der Gehalt an Na2O zwischen 500 und 5000 Gewichts-ppm liegt und dadurch, dass seine Kristallstruktur wenigstens 5 Gewichtsprozent Aluminiumoxyd in der η-Phase umfasst.

2. Aktiviertes Aluminiumoxyd, das einen Gehalt an Alkalimetallen aufweist, **dadurch gekennzeichnet, dass** der Gehalt an Alkalimetallen, ausgedrückt in M2O zwischen 500 und 8000 Gewichts-ppm liegt und dadurch, dass seine Kristallstruktur zwischen 8 Gewichtsprozent und 40 Gewichtsprozent Aluminiumoxyd in η-Phase umfasst.

3. Aktiviertes Aluminiumoxyd nach Anspruch 1, **dadurch gekennzeichnet, dass** seine Kristallstruktur höchstens 60 Gewichtsprozent Aluminiumoxyd in der η-Phase umfasst.

4. Aktiviertes Aluminiumoxyd gemäß einem der Ansprüche 1-3, **dadurch gekennzeichnet, dass** es aus der Kalzinierung von Aluminiumhydroxyd stammt, dessen Kristallstruktur wenigstens 5 Gewichtsprozent Aluminiumtrihydroxyd in Bayerit-Phase umfasst.

5. Aktiviertes Aluminiumoxyd nach einem der vorhergehenden Ansprüche, **dadurch gekennzeichnet, dass** sein Gehalt an Alkalimetallen, ausgedrückt in $M_2O$ zwischen 1000 und 3600 ppm liegt und dadurch, dass seine Kristallstrukturen zwischen 8 und 40 Gewichtsprozent Aluminiumoxyd in η-Phase umfasst.

6. Aktiviertes Aluminiumoxyd nach einem der vorhergehenden Ansprüche, **dadurch gekennzeichnet, dass** sein Gehalt an Alkalimetallen, ausgedrückt in M2O zwischen 1200 und 2900 ppm liegt und dadurch, dass seine Kristallstruktur zwischen 12 und 35 Gewichtsprozent Aluminiumoxyd in η-Phase umfasst.

7. Aktiviertes Aluminiumoxyd nach einem der vorhergehenden Ansprüche, **dadurch gekennzeichnet, dass** es eine spezifische Oberfläche von wenigstens 40 $m^2$/g aufweist.

8. Aktiviertes Aluminiumoxyd nach einem der vorhergehenden Ansprüche, **dadurch gekennzeichnet, dass** es ein Gesamtporenvolumen von wenigstens 0,15 ml/g aufweist.

9. Aktiviertes Aluminiumoxyd nach einem der vorhergehenden Ansprüche, **dadurch gekennzeichnet, dass** dessen Isomerisierungskapazität einer 1-Butenkette bei 400°C im Verhältnis zum thermodynamischen Gleichgewicht wenigstens 60% ist.

10. Aktiviertes Aluminiumoxyd nach einem der vorhergehenden Ansprüche, **dadurch gekennzeichnet, dass** dessen Isomerisierungskapazität einer 1-Butinkette bei 300°C im Verhältnis zum thermodynamischen Gleichgewicht höchstens 97% ist.

11. Herstellungsverfahren eines aktivierten Aluminiumoxyds nach einem der Ansprüche 1-9, **dadurch gekennzeichnet, dass** es die folgenden Stufen umfasst:

    1. man mischt:

    - ein Aluminiumoxyd (A) aus der schnellen Dehydratisierung von Aluminiumtrihydroxyd in Hydrargillit-Phase und
    - ein Bayerit-Aluminiumtrihydroxyd (B) in Massenanteilen A/B zwischen 100/0,1 und 100/30,

    2. gegebenenfalls formt man diese Mischung,

    3. man lässt die Mischung reifen, bis der Gehalt an Aluminiumtrihydroxyd in Bayerit-Phase wenigstens 5 Gewichtsprozent ist.

    4. man calziniert die Mischung bei einer Temperatur von wenigstens 250°C.

12. Verwendung eines aktivierten Aluminiumoxyds nach einem der Ansprüche 1-10 oder aus einem Verfahren nach Anspruch 11 als Katalysator, Katalysatorträger und/oder Adsorbtionsmittel.

**13.** Verwendung nach Anspruch 12 als Dehydratisierungs-Katalysator der Alkohole.

**14.** Verwendung nach Anspruch 12 als Isomerisierungs-Katalysator der Olefine.

**15.** Verwendung nach Anspruch 12 als Trocknungs-Reagenz der organischen Halogenide.

**Claims**

**1.** An activated alumina with an alkali metal content, **characterized in that** the alkali metal is sodium, **in that** the $Na_2O$ content is in the range 500 to 5000 ppm by weight, and **in that** its crystalline structure comprises at least 5% by weight of η phase alumina.

**2.** An activated alumina with an alkali metal content, **characterized in that** the alkali metal content, expressed as $M_2O$, is in the range 500 to 8000 ppm by weight, and **in that** its crystalline structure comprises 8% to 40% by weight of η phase alumina.

**3.** An activated alumina according to claim 1, **characterized in that** its crystalline structure comprises at most 60% by weight of η phase alumina.

**4.** An activated alumina according to one of claims 1 to 3, **characterized in that** it derives from calcining aluminium hydroxide with a crystalline structure comprising at least 5% by weight of bayerite phase aluminium trihydroxide.

**5.** An acticated alumina according to any one of the preceding claims, **characterized in that** its alkali metal content, expressed as $M_2O$, is in the range 1000 to 3600 ppm and **in that** its crystalline structure comprises between 8% and 40% by weight of η phase alumina.

**6.** An activated alumina according to any one of the preceding claims, **characterized in that** its alkali metal content, expressed as $M_2O$, is in the range 1200 to 2900 ppm and **in that** its crystalline structure comprises 12% to 35% by weight of η phase alumina.

**7.** An activated alumina according to any one of the preceding claims, **characterized in that** it has a specific surface area of at least 40 $m^2/g$.

**8.** An activated alumina according to any one of the preceding claims, **characterized in that** it has a total pore volume of at least 0.15 ml/g.

**9.** An activated alumina according to any one of the preceding claims, **characterized in that** its 1-butene chain isomerization capacity at 400°C with respect to thermodynamic equilibrium is at least 60%.

**10.** An activated alumina according to any one of the preceding claims, **characterized in that** its 1-butene isomerization capacity at 300°C with respect to thermodynamic equilibrium is at most 97%.

**11.** A process for preparing an activated alumina according to one of claims 1 to 9, **characterized in that** it comprises the following steps:

1- mixing:

- an alumina (A) resulting from rapidly dehydrating hydrargillite phase aluminium trihydroxide; and
- a bayerite aluminium trihydroxide (B):

2- optionally, forming the mixture;
3- maturing the mixture until the amount of bayerite phase aluminium trihydroxide is at least 5% by weight;
4- calcining the mixture at a temperature of at least 250°C.

**12.** Use of an activated alumina according to one of claims 1 to 10 or deriving from the process of claim 11, as a catalyst, catalyst support and/or adsorbant.

13. Use according to claim 12 as a catalyst for dehydrating alcohols.

14. Use according to claim 12, as a catalyst for isomerizing olefins.

15. Use according to claim 12, as an organic halide drying agent.